# EUROPÄISCHE PATENTSCHRIFT

(11) **EP 3 971 043 B1**
(45) Veröffentlichungstag und Bekanntmachung des Hinweises auf die Patenterteilung: **01.11.2023**
(21) Anmeldenummer: 21189117.1
(22) Anmeldetag: 02.08.2021
(51) Int. Cl.: B60R 21/13

(54) **LANDWIRTSCHAFTLICHE ARBEITSMASCHINE**
AGRICULTURAL MACHINE
ENGIN DE TRAVAIL AGRICOLE

(30) Priorität: 22.09.2020 DE 102020124720
(43) Veröffentlichungstag der Anmeldung: 23.03.2022
(73) Patentinhaber: CLAAS Selbstfahrende Erntemaschinen GmbH, 33428 Harsewinkel (DE)
(72) Erfinder: Bentfeld, Andreas, 33775 Versmold (DE); Mühlenhoff, Kai, 59320 Ennigerloh (DE); Börgermann, Rainer, 49545 Tecklenburg (DE)
(74) Vertreter: CLAAS Gruppe

(56) Entgegenhaltungen:
- EP-A1- 3 608 213
- EP-A2- 2 484 579
- DE-A1-102015 214 456
- GB-A- 2 013 142
- US-A- 3 560 019
- US-A- 4 143 903
- US-A- 5 964 310

## Beschreibung

Die vorliegende Erfindung betrifft eine selbstfahrende landwirtschaftliche Arbeitsmaschine.

Landwirtschaftliche Arbeitsmaschinen sind häufig auf abschüssigem, unbefestigtem und eventuell nachgiebigem Untergrund im Einsatz, wo eine nicht zu vernachlässigende Wahrscheinlichkeit eines Unfalls durch Umkippen besteht. Ein erhöhtes Kipprisiko besteht etwa, wenn eine Arbeitsmaschine zum Verdichten von Silage durch Überfahren in einem Fahrsilo eingesetzt wird, da das Silagegut hier eine steile und eventuell instabile Böschung aufweisen kann. Beim Umkippen kann eine Fahrerkabine der Arbeitsmaschine in Kontakt mit dem Boden gelangen und zwischen diesem und dem Fahrgestell deformiert werden. Die Fahrerkabine muss robust genug konstruiert sein, um auch in einem solchen Fall den Fahrer wirksam zu schützen.

Aus DE 10 2018 005 874 A ist eine landwirtschaftliche Arbeitsmaschine bekannt, bei der die Fahrerkabine in einem rückwärtigen Bereich über Crashboxen abgestützt und um eine unter ihrer Vorderkante verlaufende Achse schwenkbar ist, so dass von vorn auf die Kabine einwirkender Druck ein Schwenken der Kabine um die Achse und in der Folge eine Stauchung der Crashboxen bewirken kann. Im Fall eines Vornüberkippens der Arbeitsmaschine sind beide Crashboxen wirksam. Wenn jedoch die Arbeitsmaschine seitwärts umkippt, dann gerät im Wesentlichen nur die bodenabgewandte Crashbox unter Druck; die andere bleibt wirkungslos.

Die EP 2 484 579 A2 offenbart eine weitere landwirtschaftliche Arbeitsmaschine aus dem Stande der Technik. Diese Maschine ist zwischen Fahrerkabine und Fahrgestell mit einem bolzengesicherten Überrollschutz ausgestattet.

Eine Aufgabe der Erfindung ist, eine landwirtschaftliche Arbeitsmaschine mit zwischen einem Fahrgestell und einer Fahrerkabine angeordneten Crashboxen zu schaffen, bei der auch eine nach einem Seitwärtsumkippen bodennahe Crashbox zur Dissipation von Aufprallenergie und damit zum Schutz der Fahrerkabine vor übermäßiger Deformation beitragen kann.

Die Aufgabe wird gelöst, indem bei einer landwirtschaftlichen Arbeitsmaschine, bei der ein Fahrgestell ein erstes Karosserieteil und eine Fahrerkabine ein über dem ersten Karosserieteil angeordnetes und relativ zum Fahrgestell bewegliches zweites Karosserieteil bildet und wenigstens eine Crashbox zwischen der Fahrerkabine und dem Fahrgestell angeordnet ist, um durch eine sich dem Fahrgestell annähernde Bewegung der Fahrerkabine gestaucht zu werden, jeweils eine zugbelastbare Verbindung zwischen der Crashbox und der Fahrerkabine sowie zwischen der Crashbox und dem Fahrgestell vorgesehen ist. So kann die Crashbox Energie nicht nur dadurch aufnehmen, dass sie wie üblich gestaucht wird, sondern auch dadurch, dass sie in die Länge gezogen wird.

Wenigstens eine der Verbindungen sollte ein Spiel in Richtung der Relativbewegung aufweisen, um eine Bewegung der Fahrerkabine relativ zum Fahrgestell ohne Deformation der Crashbox zuzulassen.

Die Karosserieteile sollten ferner durch eine Feder verbunden sein, die bemessen ist, um die wenigstens eine Verbindung in einer Mittelstellung zwischen den Grenzen des Spiels zu halten. So kann die Fahrerkabine vor Erschütterungen des Fahrgestells während der Fahrt abgeschirmt werden.

Um die Relativbewegung von Fahrgestell und Fahrerkabine im Wesentlichen auf einen einzigen Freiheitsgrad einzuschränken, kann benachbart zu einer vorderen Kante der Fahrerkabine eine Achse definiert sein, um die die Fahrerkabine relativ zum Fahrgestell schwenkbar ist.

Die Achse ist vorzugsweise unter normalen Betriebsbedingungen am Fahrgestell fest, kann aber ihrerseits bei einem Unfall unter Energieaufnahme relativ zum Fahrgestell bewegbar sein.

Die Beweglichkeit relativ zum Fahrgestell kann dadurch erreicht werden, dass eine sich in Querrichtung der Arbeitsmaschine erstreckende Blattfeder mittig an einem der Karosserieteile, vorzugsweise dem Fahrgestell, und an ihren Enden mit dem anderen Karosserieteil, vorzugsweise der Fahrerkabine, verbunden ist.

Insbesondere kann ein Querträger des Fahrgestells sich über die gesamte Länge der Blattfeder erstrecken, um diese bei normaler Fahrt sowohl in der Mitte als auch an den mit der Fahrerkabine verbundenen Enden zu unterstützen.

Vorzugsweise ist die Verbindung der Crashbox zum Fahrgestell spielfrei; d.h. bei normaler Fahrt findet eine Relativbewegung nur zwischen der Crashbox und der Fahrgastzelle statt.

Die Crashbox weist verformbare Seitenwände (36) und wenigstens eine an den Seitenplatten befestigte Deckplatte auf. Eine der Verbindungen umfasst erfindungsgemäss einen Bolzen, der sich durch eine Öffnung der Deckplatte erstreckt, und einen ersten Kopf im Innern der Crashbox. Der Querschnitt der Öffnung ist bemessen, um eine Bewegung des Bolzens in Richtung der Relativbewegung zuzulassen; zu einer Deformation der Crashbox kommt es erst dann, wenn entweder das eine Karosserieteil, an dem der Bolzen befestigt ist, von außen gegen die Deckplatte drückt, oder wenn der Kopf von innen anschlägt und dadurch die Seitenwände in die Länge zieht.

Um den Zusammenbau zu erleichtern, sollte der erste Kopf über eine Öffnung an einer der Deckplatte gegenüberliegenden Seite der Crashbox zugänglich sein.

Wenn der Bolzen ein Außengewinde aufweist, das in ein komplementäres Innengewinde des einen Karosserieteils eingreift, dann kann durch Drehen des Bolzens die Bewegungsfreiheit des ersten Kopfs relativ zur Deckplatte justiert werden. Um ein dafür erforderliches Drehmoment auf den ersten Kopf ausüben zu können, ist die oben erwähnte Öffnung an der der Deckplatte gegenüberliegenden Seite der Crashbox hilfreich.

Eine Unterlegscheibe zwischen dem ersten Kopf und der Deckplatte ist hilfreich, um die Zugkraft des ersten Kopfs in die Deckplatte gleichmäßig um deren Öffnung herum verteilt einzuleiten und einer lokalen Überbeanspruchung vorzubeugen.

Um ein Aufreißen der Crashbox unter einer übermäßigen Zugbelastung zu vermeiden, kann zwischen den Karosserieteilen eine Überdehnungssicherung vorgesehen sein, die eine Zugkraft zwischen beiden aufnimmt, sobald die Crashbox bis an eine zulässige Grenze gedehnt ist.

Eine solche Überdehnungssicherung kann als eine Verlängerung des Bolzens über den ersten Kopf hinaus realisiert sein, die sich ihrerseits durch eine Öffnung des anderen Karosserieteils hindurch erstreckt und einen zweiten Kopf an einer von der Crashbox abgewandten Seite der Öffnung aufweist.

Die oben erwähnte Unterlegscheibe kann Teil der Überdehnungssicherung sein; insbesondere kann eine die Unterlegscheibe integrierende Überdehnungssicherung relativ zum Bolzen beweglich sein.

Insbesondere kann die Überdehnungssicherung die Form eines Bechers hat, wobei der Bolzen eine Öffnung im Boden des Bechers durchsetzt (m.a.W. die Unterlegscheibe den Boden des Bechers bildet) und der erste Kopf (39) im Innern des Bechers gehalten ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Seitenansicht einer landwirtschaftlichen Arbeitsmaschine gemäß einer ersten Ausgestaltung der Erfindung;
- Fig. 2: eine zu Figur 1 analoge Seitenansicht gemäß einer zweiten Ausgestaltung;
- Fig. 3 und 4: perspektivische Ansichten der Fahrerkabine und eines Teils des Fahrgestells;
- Fig. 5: eine spielhaltige Verbindung zwischen Fahrerkabine und Fahrgestell;
- Fig. 6: eine Abwandlung der spielhaltigen Verbindung; und
- Fig. 7: einen Schnitt durch eine Crashbox.

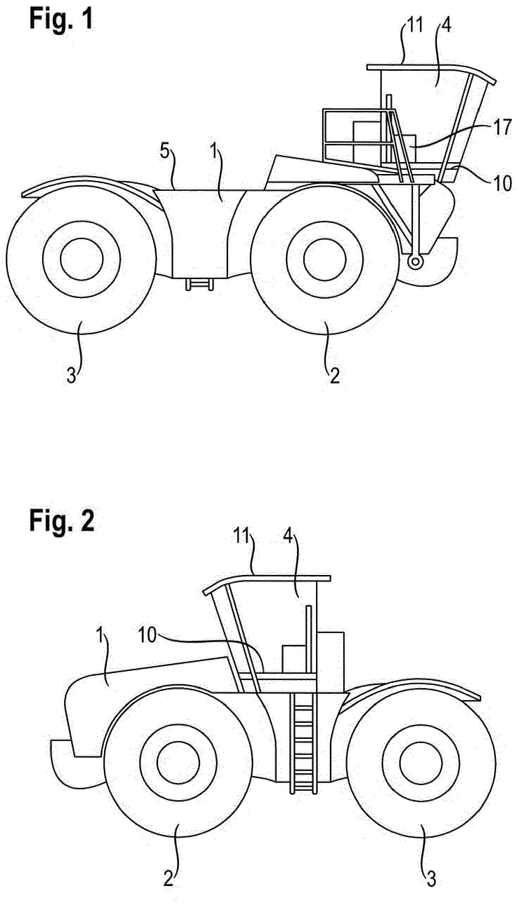

Fig. 1 zeigt eine Seitenansicht eines Traktors gemäß einer ersten Ausgestaltung der vorliegenden Erfindung. Auf einem Fahrgestell 1 mit Vorder- und Hinterrädern 2, 3 ist in über die Vorderachse nach vorn vorstehender Stellung eine Fahrerkabine 4 montiert. Hinter der Fahrerkabine 4 erstreckt sich eine Ladefläche 5, die Platz für Lasten oder Werkzeuge bietet. Insbesondere wenn die Ladefläche 5 wenig beladen ist, besteht, wenn der Traktor auf zu steil abschüssigen Untergrund gerät, die Möglichkeit, dass der Traktor vornüberkippt und mit der Vorderseite der Fahrerkabine 4 auf den Boden schlägt.

Fig. 2 zeigt eine Seitenansicht eines Traktors gemäß einer zweiten Ausgestaltung der vorliegenden Erfindung. Eine Fahrerkabine 4 ist hier auf einem Fahrgestell 1 in etwa mittig zwischen Vorder- und Hinterachsen positioniert. Ein Vornüberkippen ist hier in der Praxis kaum möglich; es besteht aber (wie auch im Fall der Fig. 1) die Möglichkeit, dass der Traktor auf seitwärts stark abschüssigem Untergrund zur Seite kippt, so dass am Ende eine Seitenwand der Fahrerkabine 4 den Boden berührt, oder er sich überschlägt und auf dem Dach der Fahrerkabine 4 liegenbleibt.

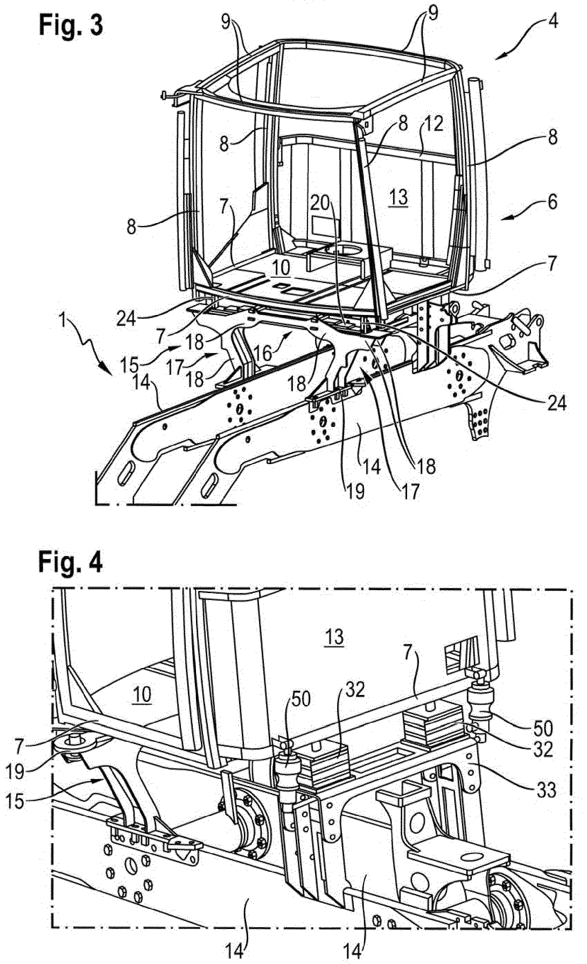

Fig. 3 und 4 zeigen ein Tragwerk 6 der Fahrerkabine 4 des Traktors aus Fig. 1 oder 2 sowie einen Ausschnitt seines Fahrgestells 1 in perspektivischen Ansichten.

Die Fahrerkabine 4 hat im Wesentlichen die Form eines Quaders, und Leisten 7, 8, 9 des Tragwerks 6 bilden die Kanten des Quaders und sind an dessen Ecken untereinander verbunden. Die Leisten 7 bilden einen Rahmen, der eine Bodenplatte 10 einfasst. Vertikale Leisten 8 begrenzen eine Türöffnung und bilden die Einfassung einer in Fig. 3 nicht gezeigten Frontscheibe.

Horizontale Leisten 9 bilden einen Rahmen für eine Dachplatte 11 (s. Fig. 1 oder 2). Eine Rückwand der Fahrerkabine 4 ist durch eine horizontale Leiste 12 unterteilt in einen durch eine Platte 13 aus Blech ausgefüllten unteren Bereich und einen oberen Bereich, der eine in Fig. 3 nicht gezeigte Heckscheibe aufnimmt.

Unter der Fahrerkabine 4 erstrecken sich zwei Längsträger 14 des Fahrgestells 1. Ein die Längsträger 14 verbindender Querträger 15 umfasst einen horizontal langgestreckten Querbalken 16 sowie zwei in etwa vertikal orientierte Säulen 17, die einen Höhenunterschied zwischen dem Querbalken 16 und den Längsträgern 14 überbrücken. Querbalken 16 und Säulen 17 haben jeweils einen H- oder U-förmigen Querschnitt. Vordere und hintere Schenkel der H- oder U- Querschnitte sind jeweils durch flache, hier in etwa T-förmige Zuschnitte 18 aus Stahlblech gebildet, die jeweils teils einer der Säulen 17 und teils dem Querbalken 16 angehören; Mittelabschnitte 19, die die Schenkel der H- oder U-Querschnitte verbinden, sind mit diesen verschweißt; so ist insbesondere am Querbalken 16 ein über dessen Länge hinweg variabler Überstand der vorderen und hinteren Schenkel über den Mittelabschnitt 19 nach oben realisierbar.

In den Figuren nicht gezeigte Federbeine von an sich bekannter Bauart sind einerseits an den Säulen 17, andererseits an der vorderen Leiste 7 oder einem daran angrenzenden vorderen Bereich der Bodenplatte 10 verankert, um die Fahrerkabine 4 von dem Querbalken 16 beabstandet zu halten und eine gedämpfte Federbewegung der Fahrerkabine 4 relativ zum Fahrgestell 1 während der Fahrt der Maschine zu ermöglichen. Um die Federbeweglichkeit der Fahrerkabine 4 im Wesentlichen auf die Vertikalrichtung einzuschränken, kann ferner ein Panhardstab vorgesehen sein, der in einer diagonalen Orientierung an den Querträger 15 und die vordere Leiste 7 angelenkt ist.

Eine mehrlagige Blattfeder 20 ist zwischen den über den Mittelabschnitt 19 des Querbalkens 16 aufragenden Teilen von dessen vorderen und hinteren Schenkeln angebracht. Der Mittelabschnitt 19 liegt stellenweise auf den Blechzuschnitten 18 auf: zum einen sind die Enden 21 des Mittelabschnitts 19 breiter als der Abstand zwischen den Zuschnitten 18, so dass die Enden 21 auf den Oberkanten der Zuschnitte 18 aufliegen, zum anderen weisen die Zuschnitte 18 jeweils wenigstens eine schlitzförmige Öffnung 22 auf, in die eine nach vorn bzw. hinten überstehende Lasche des Mittelabschnitts 19 eingreift.

Die vorderen und hinteren Zuschnitte 18 sind an ihren höchsten Punkten untereinander durch zwei Bügel 23 verbunden. Die Blattfeder 20 ist zwischen den Bügeln 23 und dem Mittelabschnitt 19 eingeklemmt.

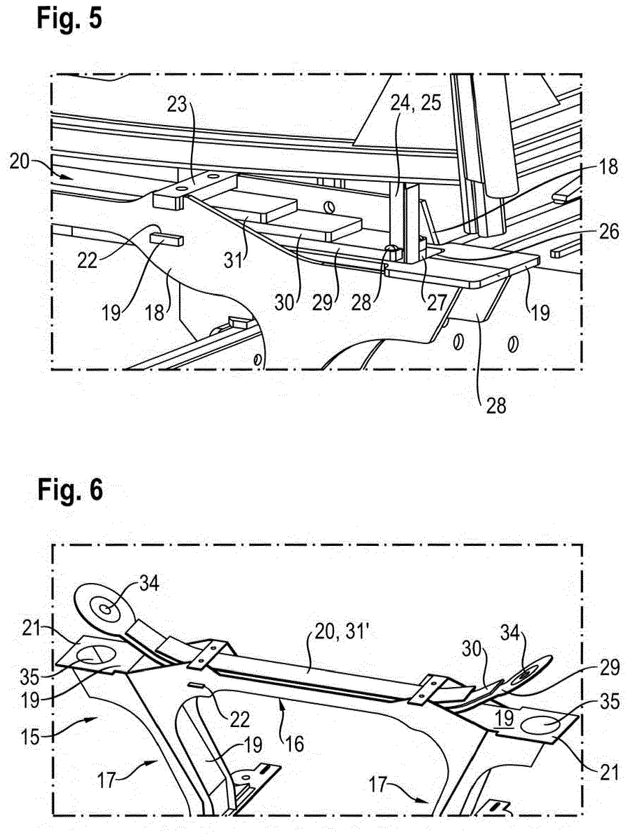

Die Fahrerkabine 4 ist mit der Blattfeder 20 durch eine Schlaufe 24 spielhaltig verbunden, die an der Bodenplatte 10 der Fahrerkabine verankert ist und sich von dort wie in Fig. 5 gezeigt nach unten erstreckt, um an den freien Enden der Blattfeder 20 anzugreifen. Am freien Ende der Blattfeder 20 ist eine - hier randoffene - Öffnung 26 ausgeschnitten. Ein Stab 27 ist in die Öffnung der Schlaufe 24 eingesteckt und an seinen aus der Schlaufe 24 überstehenden Enden beiderseits der Öffnung 26 mit Hilfe von Schrauben 28 an der Blattfeder 20 befestigt. So kann die Fahrerkabine 4 bei einem Unfall abwärts gedrückt werden, bis sie an die Blattfeder 20 oder den Querbalken 16 anstößt; wenn sie nach oben gezogen wird, zieht die Schlaufe 24, sobald sie straff gespannt ist, das freie Ende der Blattfeder 20 mit sich und verbiegt diese dabei.

Die Blattfeder 20 umfasst mehrere Lamellen 29, 30, 31, deren Länge von unten nach oben abnimmt. Die Öffnungen 26 sind in der längsten und folglich der untersten Lamelle 29 gebildet. Je stärker das freie Ende der Blattfeder 20 nach oben gezogen wird, umso größer wird die Zahl der Lamellen 29, 30, 31, die von der Deformation betroffen sind. Die Federkonstante und die Menge der pro Einheit des Deformationswegs dissipierten Energie nimmt daher mit wachsender Deformation stark zu, so dass zwar einerseits bereits eine mäßige Zugkraft ausreicht, um die Kabine 4 auszulenken, andererseits aber bei begrenzter Gesamtauslenkung eine große Menge an Aufprallenergie durch Verformung der Blattfeder 20 dissipiert werden kann.

Der Querträger 15 erstreckt sich unter einem vorderen Randbereich der Bodenplatte 10. An ihrer Rückseite ist die Fahrerkabine 4 wie in Fig. 4 zu sehen durch zwei Crashboxen 32 und einen weiteren Querträger 33 an den Längsträgern 14 abgestützt. Außerdem sind benachbart zu den Crashboxen 32 wie in DE 10 2018 005 874 A beschrieben, Federbeine 50 vorgesehen, die den hinteren Rand der Bodenplatte 10 stützen und im normalen Fahrbetrieb ein Aufschlagen der Fahrerkabine 4 auf die Crashboxen 32 verhindern, aber eine Nickbewegung der Kabine 4 um eine im Wesentlichen entlang der Blattfeder 20 verlaufende Achse zulassen. Die spielhaltige Verbindung über die Schlaufe 24 ermöglicht die Nickbewegung ohne Deformation der Blattfeder 20.

Eine abgewandelte Bauform der Blattfeder 20 in ausgelenktem Zustand ist in Fig. 6 gezeigt. Die Enden der untersten Lamelle 29 und des Mittelabschnitts 19 sind hier jeweils mit Löchern 34, 35 versehen, durch die sich (in dieser Fig. nicht gezeigte) sich vom Boden 10 der Fahrerkabine 4 abwärts erstreckende Bolzen erstrecken. Köpfe an den unteren Enden dieser Bolzen sind kleiner als die Löcher 35 des Mittelabschnitts 19, so dass sie diese ungehindert durchlaufen können, aber kleiner als die Löcher 34, so dass sie, wenn sie von unten an die Blattfeder 20 anschlagen, diese aufwärts biegen.

Wie eingangs mit Bezug auf Fig. 1 und 2 erläutert, können bei einem Unfall insbesondere Kräfte von vorn oder aus seitlicher Richtung auf die Fahrerkabine 4 einwirken. Den Kräften von vorn kann die Fahrerkabine 4 im Wesentlichen unter Beibehaltung ihrer Form nachgeben, indem sie beide Crashboxen 32 staucht und die freien Enden der Blattfeder 20 nach oben zieht.

Wenn bei einem Unfall Druck aus seitlicher Richtung auf die Fahrerkabine 4 einwirkt, dann führt dies zu einer Stauchbeanspruchung der Crashbox 32 und einem Anschlagen der Kabine 4 an die Blattfeder 20 an der druckabgewandten Seite der Kabine 4 und zu einer Zugbeanspruchung auf der druckzugewandten Seite. Die Stauchbeanspruchung wird zum Teil bestimmungsgemäß von der Crashbox 32 aufgenommen.. Auf der druckzugewandten Seite kann die Blattfeder 20 durch Verbiegung, wie oben erläutert, eine große Menge an Energie aufnehmen.

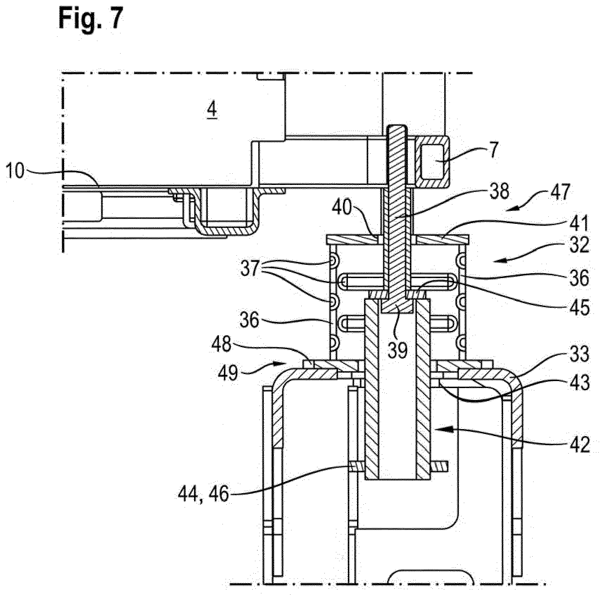

Auch die Crashbox 32 auf der druckzugewandten Seite ist einer Zugbeanspruchung ausgesetzt. Der in Fig. 7 gezeigte Querschnitt der Crashbox 32 ermöglicht es dieser, auch bei Zugbeanspruchung Energie aufzunehmen: Die Crashbox 32 hat aufrechte Seitenwände 36, in denen in an sich bekannter Weise Wellen 37 geformt sind, um ein reproduzierbares Stauchverhalten zu erzielen, und die entlang ihrer oberen und unteren Kanten mit Deckplatten 41, 48 fest verbunden sind. Die Wellen 37 können aber auch unter Energieaufnahme eingeebnet werden, wenn die Seitenwände 36 einer Zugbeanspruchung ausgesetzt sind. Um eine solche Zugbeanspruchung im Bedarfsfall erzeugen zu können, ist eine Verbindung 47 zwischen der Fahrerkabine und der Crashbox gebildet, indem an der Bodenplatte 10 - analog zur Ausgestaltung der Fig. 6 - ein Bolzen 38 verankert ist, der durch eine Öffnung 40 in der oberen Deckplatte 41 der Crashbox 32 in deren Innenraum eingreift und dort einen Kopf 39 trägt. Die untere Deckplatte 48 ist in einer zweiten Verbindung 49 unbeweglich, durch Schweißung, Schrauben o.dgl., am Querträger 33 befestigt. Indem der Kopf 39 bei einer Aufwärtsbewegung der Fahrerkabine 4 die obere Deckplatte 41 mit sich zieht, kann er die Seitenwände 36 vertikal in die Länge ziehen. Diese Möglichkeit besteht, wenn die Crashbox 32 intakt und unverformt ist, aber in noch größerem Umfang, wenn sie bereits im Rahmen des Unfallgeschehens gestaucht worden ist. Dies ist insbesondere dann von Vorteil, wenn die Kabine 4, z.B. bei einem Überrollvorgang, Belastungen in wechselnden Richtungen ausgesetzt ist.

Fig. 7 zeigt eine Gleichgewichtsstellung, in der die Bewegungsfreiheit der Fahrerkabine 4 nach unten bis zu einem Aufsetzen der hinteren Leiste 7 auf die Deckplatte 41 und nach oben bis zu einem Anschlagen des Kopfes 39 von unten an die Deckplatte 41 im Wesentlichen gleich ist. Das Spiel nach unten ist durch die oben erwähnten Federbeine 50 bestimmt; das Spiel nach oben kann justiert werden, wenn der Bolzen 38 und der Kopf 39 Schaft und Kopf einer Schraube bilden, die in ein Innengewinde der Fahrerkabine 4 eingeschraubt ist. Um zu diesem Zweck ein Drehmoment auf den Kopf 39 ausüben zu können, sind im Querträger 33 und einer auf dem Querträger unbeweglich befestigten zweiten Deckplatte der Crashbox 32 eine Öffnung 43 ausgespart, über die ein Schraubwerkzeug in die Crashbox 32 eingeführt werden kann. Eine nicht dargestellte Kontermutter kann in Kontakt mit der Fahrerkabine 4 vorgesehen sein, um eine eingestellte Stellung der Schraube zu fixieren.

Auf dem Kopf 39 liegt eine Unterlegscheibe 45 auf. Da deren Durchmesser größer ist als der des Kopfes, legt sie sich, wenn sie bei einer Aufwärtsbewegung der Fahrerkabine 4 mit der Deckscheibe 41 in Kontakt kommt, auf ihrem gesamten Umfang an letztere an und verteilt so eine vom Kopf 39 möglicherweise nur punktuell übertragene Zugkraft gleichmäßig über den gesamten Umfang der Öffnung 40.

Um zu verhindern, dass eine übermäßige Zugbeanspruchung der Deckplatte 41 zu einem Abreißen führt, ist eine Überdehnungssicherung vorgesehen, die eingerichtet ist, eine Zugkraft des Bolzens 38 unter Umgehung der Crashbox 32 auf den Querträger 33 zu übertragen. Die Überdehnungssicherung ist hier eine Verlängerung 42 des Bolzens 38 über den Kopf 39 hinaus, die die Öffnung 43 des Querträgers 33 durchgreift und einen zweiten, die Bewegungsfreiheit der Kabine 4 durch Anschlagen am Querträger 33 begrenzenden Kopf 44 trägt. Im hier gezeigten Fall hat die Verlängerung 42 die Form eines auf dem Kopf stehenden Bechers. Der Becher hat einen rohrförmigen Schaft; sein nach oben gekehrter Boden ist durch die Unterlegscheibe 45 gebildet ist, und der Kopf 44 ist durch eine radial nach außen gerichtete Krempe 46 am vom Boden 45 abgewandten Ende des Schafts gebildet. Über den hohlen Schaft ist der Kopf 39 für ein Schraubwerkzeug erreichbar. Im Stillstand der Arbeitsmaschine liegen Kopf 39 und Boden 45 weit genug unter der Deckplatte 41, um einen Kontakt zwischen Boden 45 und Deckplatte 41 auch dann zu vermeiden, wenn die Kabine 4 im normalen Fahrbetrieb auf und ab wippt. Der Abstand zwischen der Krempe 46 und dem Querträger 33 ist größer als der zwischen Boden 45 und Deckplatte 41 der unverformten Crashbox, so dass die Krempe 46 erst dann an den Querträger 33 anschlagen kann, wenn die Crashbox 32 über die Länge, die sie im intakten Zustand aufweist, hinaus gedehnt worden ist.

### Bezugszeichen

- 1: Fahrgestell
- 2: Vorderrad
- 3: Hinterrad
- 4: Fahrerkabine
- 5: Ladefläche
- 6: Tragwerk
- 7: Leiste
- 8: Leiste
- 9: Leiste
- 10: Bodenplatte
- 11: Dachplatte
- 12: Leiste
- 13: Platte
- 14: Längsträger
- 15: Querträger
- 16: Querbalken
- 17: Säule
- 18: Zuschnitt
- 19: Mittelabschnitt
- 20: Blattfeder
- 21: Ende von 19
- 22: Öffnung
- 23: Bügel
- 24: Schlaufe
- 25 26: Öffnung
- 27: Kopf
- 28: Schraube
- 29: Lamelle
- 30: Lamelle
- 31: Lamelle
- 32: Crashbox
- 33: Querträger
- 34: Loch
- 35: Loch
- 36: Seitenwand
- 37: Welle
- 38: Bolzen
- 39: Kopf
- 40: Öffnung
- 41: Deckplatte
- 42: Verlängerung
- 43: Öffnung
- 44: Kopf
- 45: Boden
- 46: Krempe
- 47: Verbindung
- 48: Deckplatte
- 49: Verbindung
- 50: Federbein

## Patentansprüche

1. Landwirtschaftliche Arbeitsmaschine, bei der ein Fahrgestell (1) ein erstes Karosserieteil (1) und eine Fahrerkabine (4) ein über dem ersten Karosserieteil (1) angeordnetes und relativ zum Fahrgestell bewegliches zweites Karosserieteil (4) bildet und wenigstens eine Crashbox (32) zwischen der Fahrerkabine (4) und dem Fahrgestell (1) angeordnet ist, um durch eine sich dem Fahrgestell (1) annähernde Bewegung der Fahrerkabine (4) gestaucht zu werden, **dadurch gekennzeichnet, dass** jeweils eine zugbelastbare Verbindung (47, 49) zwischen der Crashbox (32) und der Fahrerkabine (4) sowie zwischen der Crashbox (32) und dem Fahrgestell (1) vorgesehen ist, wobei die Crashbox (32) verformbare Seitenwände (36) und wenigstens eine an den Seitenplatten befestigte Deckplatte (41) aufweist, und dass eine der Verbindungen (47) einen Bolzen (38), der sich durch eine Öffnung der Deckplatte (41) erstreckt, und einen ersten Kopf (39) im Innern der Crashbox (32) umfasst.

2. Landwirtschaftliche Arbeitsmaschine nach Anspruch 1, **dadurch gekennzeichnet, dass** wenigstens eine der Verbindungen (47) ein Spiel in Richtung der Relativbewegung aufweist.

3. Landwirtschaftliche Arbeitsmaschine nach Anspruch 2, **dadurch gekennzeichnet, dass** die Karosserieteile (1, 4) ferner durch eine Feder (25) verbunden sind, die bemessen ist, um die wenigstens eine Verbindung (47) in einer Mittelstellung zwischen den Grenzen des Spiels zu halten.

4. Landwirtschaftliche Arbeitsmaschine nach Anspruch 1 oder 2, **dadurch gekennzeichnet, dass** die Relativbewegung eine Schwenkbewegung um eine zu einer vorderen Kante der Fahrerkabine benachbarte Achse ist.

5. Landwirtschaftliche Arbeitsmaschine nach einem der vorhergehenden Ansprüche, **dadurch gekennzeichnet, dass** die Verbindung (49) zwischen der Crashbox (32) und dem Fahrgestell (1) spielfrei ist.

6. Landwirtschaftliche Arbeitsmaschine nach einem der vorhergehenden Ansprüche, **dadurch gekennzeichnet, dass** der erste Kopf (39) über eine Öffnung (43) an einer der Deckplatte gegenüberliegenden Seite der Crashbox (32) zugänglich ist.

7. Landwirtschaftliche Arbeitsmaschine nach einem der Ansprüche 1 bis 6, **dadurch gekennzeichnet, dass** der Bolzen (38) ein Außengewinde aufweist, das in ein komplementäres Innengewinde eines der Karosserieteile (4) eingreift.

8. Landwirtschaftliche Arbeitsmaschine nach Anspruch 6 oder 7, **dadurch gekennzeichnet, dass** eine Unterlegscheibe (45) zwischen dem ersten Kopf (39) und der Deckplatte (41) vorgesehen ist.

9. Landwirtschaftliche Arbeitsmaschine nach einem der Ansprüche 6 bis 8, **dadurch gekennzeichnet, dass** eine Überdehnungssicherung zwischen den Karosserieteilen (1, 4) vorgesehen ist, um eine Zugkraft zwischen beiden aufzunehmen, sobald die Crashbox (32) bis an eine zulässige Grenze gedehnt ist.

10. Landwirtschaftliche Arbeitsmaschine nach Anspruch 9, **dadurch gekennzeichnet, dass** die Überdehnungssicherung den Bolzen (38) bis durch eine Öffnung (43) des anderen Karosserieteils (1) hindurch verlängert und einen zweiten Kopf (44) an einer von der Crashbox (32) abgewandten Seite der Öffnung (43) aufweist.

11. Landwirtschaftliche Arbeitsmaschine nach Anspruch 10, **dadurch gekennzeichnet, dass** die Überdehnungssicherung die Form eines Bechers hat, wobei der Bolzen (38) eine Öffnung im Boden des Bechers durchsetzt und der erste Kopf (39) im Innern des Bechers gehalten ist.

## Claims

1. An agricultural working machine in which a chassis (1) has a first bodywork portion (1) and a driver's cab (4) forms a second bodywork portion (4) which is disposed above the first bodywork portion (1) and is movable relative to the chassis, and at least one crash box (32) is disposed between the driver's cab (4) and the chassis (1) in order to be compressed by a movement of the driver's cab (4) which approaches the chassis (1), **characterized in that** a connection (47, 49) which can be placed under tension is provided between the crash box (32) and the driver's cab (4) as well as between the crash box (32) and the chassis (1), wherein the crash box (32) has deformable side walls (36) and at least one cover plate (41) secured to the side panels, and **in that** one of the connections (47) comprises a pin (38) which extends through an opening of the cover plate (41), and a first head (39) inside the crash box (32).

2. The agricultural working machine according to claim 1, **characterized in that** at least one of the connections (47) has a play in the direction of the relative movement.

3. The agricultural working machine according to claim 2, **characterized in that** furthermore, the bodywork portions (1, 4) are connected by means of a spring (25) which is proportioned to hold the at least one connection (47) in a central position between the limits of the play.

4. The agricultural working machine according to claim 1 or claim 2, **characterized in that** the relative movement is a pivotal movement about an axis adjacent to a front edge of the driver's cab.

5. The agricultural working machine according to one of the preceding claims, **characterized in that** the connection (49) between the crash box (32) and the chassis (1) is without any play.

6. The agricultural working machine according to one of the preceding claims, **characterized in that** the first head (39) is accessible via an opening (43) at a side of the crash box (32) which is opposite to the cover plate.

7. The agricultural working machine according to one of claims 1 to 6, **characterized in that** the pin (38) has an external thread which engages in a complementary internal thread of one of the bodywork portions (4).

8. The agricultural working machine according to claim 6 or claim 7, **characterized in that** a washer (45) is provided between the first head (39) and the cover plate (41).

9. The agricultural working machine according to one of claims 6 to 8, **characterized in that** an overextension safety device is provided between the bodywork portions (1, 4) in order to take up a tensile force between the two as soon as the crash box (32) has extended up to a permissible limit.

10. The agricultural working machine according to claim 9, **characterized in that** the overextension safety device lengthens the pin (38) up to through an opening (43) of the other bodywork portion (1) and has a second head (44) on a side of the opening (43) which faces away from the crash box (32).

11. The agricultural working machine according to claim 10, **characterized in that** the overextension safety device is in the form of a cup, wherein the pin (38) passes through an opening in the base of the cup and the first head (39) is held inside the cup.

## Revendications

1. Machine de travail agricole, dans laquelle un châssis (1) forme une première partie de carrosserie (1), et une cabine de conduite (4) forme une seconde partie de carrosserie (4) disposée au-dessus de la première partie de carrosserie (1) et déplaçable par rapport au châssis, et au moins un absorbeur de chocs (32) est disposé entre la cabine de conduite (4) et le châssis (1) pour être écrasé par un déplacement de la cabine de conduite (4) s'approchant du châssis (1), **caractérisée en ce que** respectivement une liaison sollicitable en traction (47, 49) entre l'absorbeur de chocs (32) et la cabine de conduite (4) ainsi qu'entre l'absorbeur de chocs (32) et le châssis (1) est prévue, l'absorbeur de chocs (32) comportant des parois latérales déformables (36) et au moins une plaque de recouvrement (41) fixée aux plaques latérales, et **en ce qu'**une des liaisons (47) inclut un goujon (38), qui s'étend à travers une ouverture de la plaque de recouvrement (41), et une première tête (39) à l'intérieur de l'absorbeur de chocs (32).

2. Machine de travail agricole selon la revendication 1, **caractérisée en ce qu'**au moins une des liaisons (47) présente un jeu en direction du déplacement relatif.

3. Machine de travail agricole selon la revendication 2, **caractérisée en ce que** les parties de carrosserie (1, 4) sont en outre reliées par l'intermédiaire d'un ressort (25) qui est dimensionné pour maintenir la au moins une liaison (47) dans une position intermédiaire entre les limites du jeu.

4. Machine de travail agricole selon la revendication 1 ou 2, **caractérisée en ce que** le déplacement relatif est un mouvement pivotant autour d'un axe voisin d'un bord avant de la cabine de conduite.

5. Machine de travail agricole selon une des revendications précédentes, **caractérisée en ce que** la liaison (49) entre l'absorbeur de chocs (32) et le châssis (1) est sans jeu.

6. Machine de travail agricole selon une des revendications précédentes, **caractérisée en ce que** la première tête (39) est accessible à travers une ouverture (43) sur un côté de l'absorbeur de chocs (32) situé à l'opposé de la plaque de recouvrement.

7. Machine de travail agricole selon une des revendications 1 à 6, **caractérisée en ce que** le goujon (38) comporte un filet extérieur qui pénètre dans un filet intérieur complémentaire d'une des parties de carrosserie (4).

8. Machine de travail agricole selon la revendication 6 ou 7, **caractérisée en ce qu'**une rondelle (45) est prévue entre la première tête (39) et la plaque de recouvrement (41).

9. Machine de travail agricole selon une des revendications 6 à 8, **caractérisée en ce qu'**une sécurité contre un allongement excessif est prévue entre les parties de carrosserie (1, 4) pour absorber une force de traction dès que l'absorbeur de chocs (32) est allongé jusqu'à sa limite admise.

10. Machine de travail agricole selon la revendication 9, **caractérisée en ce que** la sécurité contre un allongement excessif prolonge le goujon (38) jusqu'à travers une ouverture (43) de l'autre partie de carrosserie (1) et comporte une seconde tête (44) sur un côté de l'ouverture (43) situé à l'opposé de l'absorbeur de chocs (32) .

11. Machine de travail agricole selon la revendication 10, **caractérisée en ce que** la sécurité contre un allongement excessif a la forme d'un godet, le goujon (38) traversant une ouverture dans le fond du godet et la première tête (39) étant maintenue à l'intérieur du godet.
